# EUROPEAN PATENT APPLICATION

(11) **EP 0 605 195 A2**
(43) Date of publication of application: **06.07.1994**
(21) Application number: 93310441.6
(22) Date of filing: 22.12.1993
(51) Int. Cl.: C08L 71/12, C08K 5/13, C08K 5/17, C08K 5/37

(54) **Poly(phenylene ether) resin compositions**

(30) Priority: 28.12.1992 JP 360928/92
(71) Applicant: GE PLASTICS JAPAN LIMITED, Chuo-Ku, Tokyo (JP)
(72) Inventor: Morioka, Masataka, Moka City, Tochigi Prefecture (JP); Inoue, Kazushige, Moka City, Tochigi Prefecture (JP); Yamaguchi, Shinichi, Utsunomiya City, Tochigi Prefecture (JP)
(74) Representative: Pratt, Richard Wilson

(57) **Abstract**

Resin compositions of (A) 1-100 wt. parts poly(phenylene ether) resins, and (B) 99-0 wt. parts polystyrene resins, characterized in that they contain (C) 0.05-5 wt. parts, per 100 wt. parts of (A) and (B), compounds having the structure represented by the following formula 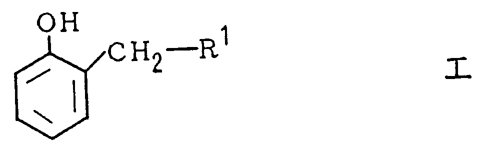
(where R¹ represents -0R², -SR² or -N(R²)₂, each R² being independently a hydrogen atom, a linear or branched alkyl group having 1-7 carbons, or a substituted or unsubstituted phenyl group), have excellent melt flow and are suitable for the production of large moldings with thin sections.

## Description

The present invention relates to resin compositions containing poly(phenylene ether) (hereinafter abbreviated PPE) resins and optionally polystyrene (hereinafter abbreviated PS) resins.

Poly(phenylene ethers) are resins having excellent properties such as heat resistance and stiffness, which have attracted attention as engineering plastics. However, their melt viscosity is high, and so melt processing of the neat resins requires the use of high temperatures, which cause problems such as discoloration, oxidation, degradation, etc.

For this reason, polystyrene resins have often been compounded with PPE resins. In recent years, however, with the trend toward ever larger moldings with thinner sections, it has not been possible to obtain sufficient melt flow simply by compounding PPEs with polystyrene resins. Thus there has been the problem that these resins cannot be used to produce large moldings having thin sections.

The object of the present invention is to provide poly(phenylene ether) resin compositions with excellent melt flow, suitable for the production of large moldings with thin sections.

The present inventors have found that mixing resin compositions containing poly(phenylene ether) resins and optionally polystyrene resins with a certain amount of compounds having a specific structure imparts excellent melt fluidity to the compositions. That discovery has led to the present invention.

The present invention thus comprises resin compositions containing:
(A) 1∼100 wt. parts poly(phenylene ether) resins and
(B) 99∼0 wt. parts polystyrene resins,

characterized in that they also contain 0.05∼5 wt. parts, per 100 wt. parts of (A) and (B), compounds having the structure represented by the following general formula: 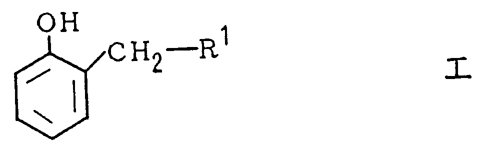
(where R¹ represents -OR², -SR², or -N(R²)₂, each R² being independently a hydrogen atom, a linear or branched alkyl group having 1∼7 carbons, or a substituted or unsubstituted phenyl group).

The linear or branched alkyl group represented by R² may have 1∼7 carbons, preferably 1∼5 carbons. The carbons in Formula 1 may be replaced with elements other than carbon which form aromatic rings substituted with -CH₂R¹ and hydroxy groups.

Component (C) in the present invention is a compound having the structure shown in Formula 1, such as 2-dimethylaminomethylphenol, 2-(di-*tert*-butylaminomethyl)phenol, 2,4,6,tris(dimethylaminomethyl)phenol, 2,4-dimethyl-6-hydroxymethylphenol, 2-hydroxybenzyl alcohol, etc.

The poly(phenylene ether) (PPE) resins used as component (A) in the present invention may be known polymers, such as those represented by the general formula: 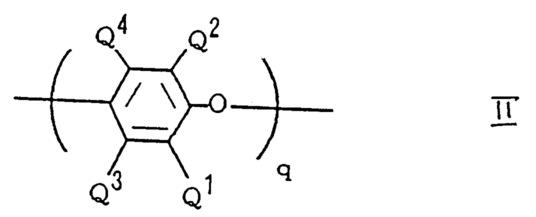
(where Q¹, Q², Q³, and Q⁴ are each independently a monovalent substituent such as a hydrogen atom, a halogen atom, an alkyl group, an alkoxy group, a haloalkyl or haloalkyoxy group having at least 2 carbon atoms between the halogen atom and the phenyl ring, and having no tertiary *α-carbons*; *and q* is an integer representing the degree of polymerization. They may be homopolymers having a single type of repeating unit represented by this general formula, or copolymers combining two or more different repeating units of this type.

There is no particular restriction on the method used to produce the PPEs. They may be prepared, for example, by the reaction of phenols as recited in the specifications of U.S. Patent No. 3,306,874, 3,257,357, or 3,257,358. The phenols which can be used include, but are not limited to, 2,6-dimethylphenol, 2,6-diethylphenol, 2,6-dibutylphenol, 2,6-dilaurylphenol, 2,6-dipropylphenol, 2,6-diphenylphenol, 2-methyl-6-ethylphenol, 2-methyl-6-cyclohexylphenol, 2-methyl-6-tolylphenol, 2-methyl-6-methoxyphenol, 2-methyl-6-butylphenol, 2,6-dimethoxyphenol, 2,3,6-trimethylphenol, 2,3,5,6-tetramethylphenol, or 2,6-diethoxyphenol. They may be homopolymers formed by reaction of a single such phenol, or copolymers formed by reaction of such a phenol with one or more different phenols.

Preferred examples are those in which Q¹ and Q² are alkyl groups having 1∼4 carbons, and Q₃ and Q₄ are hydrogen atoms or alkyl groups having 1∼4 carbons. Examples include poly(2,6-dimethyl-1,4-phenylene ether), poly(2,6-diethyl-1,4-phenylene ether), poly(2-methyl-6-ethyl-1,4-phenylene ether), poly(2-methyl-6-propyl-1,4-phenylene ether), poly(2,6-dipropyl-1,4-phenylene ether), poly(2-ethyl-6-propyl-1,4-phenylene ether), etc. PPE copolymers may have the same repeating units as one of these poly(phenylene ethers) and in addition a portion of repeating units formed from trialkyl phenols such as 2,3,6-trimethylphenol. The PPEs may also be copolymers formed by grafting with styrenic compounds. For example, one of the PPEs listed above may be grafted with a compound such as styrene, *α*-methylstyrene, vinyltoluene, chlorostyrene, etc. to form a copolymer.

The polystyrene (PS) resins used as component (B) in the present invention are known polymers, in which at least 25 wt% of the structural repeating units are derived from aromatic vinyl compounds such as those represented by the general formula 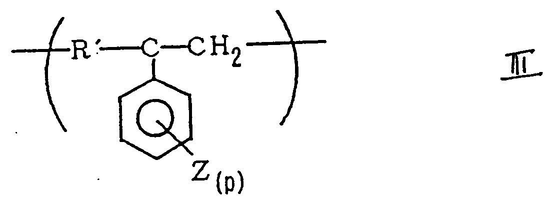
(where R¹ is a hydrogen atom or an alkylene group having 1∼4 carbons, Z is a substituent which may be a halogen atom or an alkyl group having 1∼4 carbons, and *p* is an integer 0∼5). Such styrene polymers may be homopolymers or copolymers of styrene or styrene derivatives, such as *p*-methylstyrene, *α*-methylstyrene, *α*-methyl-*p*-methylstyrene, chlorostyrene, bromostyrene, etc. They may also be rubber-modified polystyrenes (hereinafter abbreviated "HIPS") composed of 70∼99 wt% aromatic vinyl compounds and 1∼30 wt% diene rubbers. The diene rubber component of the HIPS may be a homopolymer or copolymer of conjugated dienes such as butadiene, isoprene, or chloroprene, a copolymer of conjugated dienes with unsaturated nitriles or aromatic vinyl compounds, natural rubber, or a combination of two or more such polymers. Polybutadiene and butadienestyrene copolymers are particularly preferred. The HIPS may be obtained by emulsion polymerization, suspension polymerization, bulk polymerization, solution polymerization, or a combination thereof.

To further increase their impact strength, resin compositions in accordance with the present invention may also contain up to 70 wt. parts, per 100 wt. parts of (A) PPE and (B) PS, optional components. Examples of such components include polyethylene, polypropylene, ethylene/propylene copolymer, ethylene/1-butene copolymer, ethylene/propylene/dicyclopentadiene copolymer, ethylene/propylene/5-ethylidene-2-norbornene copolymer, ethylene/propylene/1,4-hexadiene copolymer, ethylene/vinyl acetate copolymer, ethylene/butyl acrylate copolymer, ethylene/*α*,*β*-unsaturated carboxylic acid or anhydride copolymers, ethylene/*α*,*β*-unsaturated carboxylic acid glycidyl ester copolymers, and other olefin rubbers, as well as graft copolymers obtained by polymerization of vinyl compound mixtures containing at least methyl methacrylate and acrylonitrile in the presence of diene rubbers, A-B-A' block copolymers (in which A and A' are blocks of vinyl hydrocarbons and B is a block of polymerized conjugated dienes), and hydrogenated A-B-A' block copolymers in which the diene block B has been hydrogenated.

The proportions of the PPE component (A) and the PS component (B) in resin compositions in accordance with the present invention are 1∼100 wt. parts (A) and 99∼0 wt. parts (B). The amount of component (C) added is 0.05∼5 wt. parts, preferably 0.1∼3 wt. parts, most preferably 0.2∼2 wt. parts. If less than 0.05 wt. part is added, it will not be possible to improve the melt flow. On the other hand, if more than 5 wt. parts is added, the heat resistance of the composition will be impaired.

Resin compositions in accordance with the present 5 invention may also contain other additives known to those skilled in the art, including pigments or dyes, reinforcing agents or fillers such as glass fibers metal fibers, metal flakes, or carbon fibers, heat stabilizers, antioxidants, ultraviolet absorbers, other light stabilizers, flow promoters, plasticizers, antistatic agents, flame retardants, etc.

There is no particular restriction on the method used to prepare resin compositions in accordance with the present invention; the usual techniques may be used. Pellets, powders, or flakes of the PPE component (A), the PS component (B), and the compound component (C) may be combined in a high-speed mixer to give a uniform mixture, which is then melt kneaded in a single-screw or multiple-screw extruder having adequate kneading power. It is also possible to melt knead the components in a Banbury mixer or rubber mixing rolls. The PPE component (A) and component (C) may be mixed first, then that mixture melt kneaded with the PS component (B) in pellet, powder, or flake form.

Resin compositions in accordance with the present invention may be used as engineering plastics for applications such as automobile parts, electric or electronic equipment parts, or other uses in which moldings with good stiffness, heat resistance, and dimensional stability are required.

The present invention will now be explained in detail by means of examples and comparisons, although it is by no means limited to these.

### Examples

The compounds used were as follows:
Component (A): Poly(phenylene ether) (PPE) resin
   Poly(2,6-dimethyl-1,4-phenylene ether), intrinsic viscosity [η] (in chloroform at 25°C) 0.48 dL/g
Component (B): Polystyrene (PS) resin
   Rubber-modified polystyrene (HIPS), HT644® (from Mitsubishi Kasei, LTd.)
Component (C):
   Compound (a): 2-dimethylaminomethylphenol
   Compound (b): 2-(di-*tert*-butylaminomethyl)phenol
   Compound (c): 2-hydroxybenzyl alcohol

### Examples 1∼3, Comparisons 1∼2

The various components, in the amounts (wt. parts) listed in Table 1, were mixed in a blender, then kneaded in a 30-mm twin-screw extruder at a barrel temperature of 300°C and 280 rpm, and extruded to form pellets, whose melt viscosity was measured. In Example 1 and Comparison 1, the pellets were injection molded at a cylinder temperature of 290°C and a mold temperature of 60°C to form test pieces, whose properties were then measured.

The properties listed in Table 1 were evaluated as follows.
Notched Izod impact strength (NIZ): ASTM D256
Tensile properties (strength TS, elongation TE): ASTM D638

The results are listed in Table 1.

**Table 1**

| | Example 1 | Example 2 | Comp. 3 | Example 3 | Comp. 2 |
|---|---|---|---|---|---|
| PPE (wt. parts) | 70 | 70 | 70 | 80 | 80 |
| HIPS (wt. parts) | 30 | 30 | 30 | 20 | 20 |
| Compound (a) (wt. parts) | 0.5 | - | - | - | - |
| Compound (b) (wt. parts) | - | - | - | 1 | - |
| Compound (c) (wt. parts) | - | 0.5 | - | - | - |
| Melt Viscosity (poise) | | | | | |
| 300°C | 4400 | 4200 | 5150 | - | - |
| 320°C | - | - | - | 3580 | 4000 |
| NIZ (kg·cm/cm) | 8 | 7 | 7 | - | - |
| TS (kg/cm²) | 710 | 710 | 720 | - | - |
| TE (%) | 42 | 40 | 21 | - | - |

The compositions in Examples 1 and 2, to which Compounds (a) or (b) were added, showed lower melt viscosities than Comparison 1, to which no component (C) was added.

Resin compositions in accordance with the present invention have excellent melt flow, and so can be molded easily to form large parts having thin sections.

## Claims

1. Resin compositions of:
(A) 1∼100 wt. parts poly(phenylene ether) resins, and
(B) 99∼0 wt. parts polystyrene resins,
characterized in that they contain
(C) 0.05∼5 wt. parts, per 100 wt. parts of (A) and (B), compounds having the structure represented by the following formula 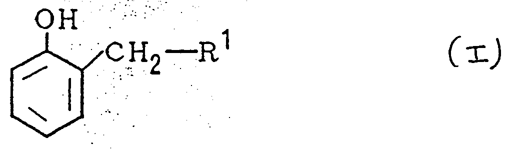
(where R¹ represents -OR², -SR², or -N(R²)₂, each R² being independently a hydrogen atom, a linear or branched alkyl group having 1∼7 carbons, or a substituted or unsubstituted phenyl group).
